Europäisches Patentamt

European Patent Office

Office européen des brevets

(19)

(11) Veröffentlichungsnummer: **0 014 355**
**A1**

(12)    # EUROPÄISCHE PATENTANMELDUNG

(21) Anmeldenummer: 80100238.7

(51) Int. Cl.³: **F 24 J 3/02**

(22) Anmeldetag: 18.01.80

(30) Priorität: 03.02.79 DE 7902945 U
15.09.79 DE 7926227 U

(43) Veröffentlichungstag der Anmeldung:
20.08.80 Patentblatt 80/17

(84) Benannte Vertragsstaaten:
AT BE CH DE FR GB IT LU NL SE

(71) Anmelder: VMH Multibeton Vertriebsgesellschaft
Moderner Heizungstechnik mbH
Friedrich-Ebert Platz 5
D-5060 Leverkusen 1(DE)

(72) Erfinder: Lindner, Helmut
Am Kornfeld 28
D-4600 Dortmund 30(DE)

(74) Vertreter: Patentanwälte Dipl.-Ing. W.Dahlke Dipl.-Ing.
H.-J. Lippert
Frankenforster Strasse 137
D-5060 Bergisch Gladbach 3(DE)

(54) Wärmeaustauscher zur Gewinnung von Umweltwärme.

(57) Ein Wärmeaustauscher Zur Gewinnung von Umweltwärme, der vorteilhaft auch auf Hausdächer aufgelegt werden
kann, besitzt langgestreckte konvex verformte Metallbleche
(1, 11) die von parallel zueinander angeordneten Spannlatten
(4, 14) gehalten werden. Die Metallbleche sind mit Sicken (2,
12) versehen, die in Längsrichtung der Metallbleche verlaufen
und Rohre (3, 13) zur Führung einer Flüssigkeit klemmend
aufnehmen, die die aufgenommene Wärmeenergie abführt.

Fig. 4

EP 0 014 355 A1

"Wärmeaustauscher zur Gewinnung von Umweltwärme"

Die Erfindung betrifft einen Wärmeaustauscher zur Gewinnung von Umweltwärme.

Die Bemühungen, den Anteil an Primärenergie bei der Beheizung von Wohnhäusern, der Erhitzung von Brauchwasser und der-gleichen soweit wie möglich zu reduzieren, führte einerseits zum Bau von Wärmepumpenanlagen, die dem Erdreich oder dem Grundwasser oder anderen stehenden oder fließenden Gewässern die benötigte Energie entziehen. Der Einsatz derartiger Wärmepumpenanlagen ist aber nicht überall möglich und vor allem nicht in allen Fällen ausreichend.

Auch der Einsatz von Sonnenkollektoren rentiert sich besonders in kälteren Klimazonen nur während der warmen Jahreszeit mit ausreichender Sonnenscheindauer.

Der Erfindung liegt die Aufgabe zugrunde, einen Wärmeaustauscher so zu gestalten, daß sich mit seiner Hilfe nicht nur die von der Sonne eingestrahlte Energie gewinnen läßt, sondern auch in sonnenarmen Stunden bzw. Jahreszeiten Wärmeenergie aus der Umwelt gewonnen und nutzbar gemacht werden kann. Insbesondere beim Vorhandensein einer Wärmepumpe ist es möglich, Energie nicht nur aus der Direktstrahlung der Sonne, sondern auch aus diffuser Strahlung sowie aus der Luft, gegebenenfalls auch aus dem niedergehenden Regen, zu gewinnen, indem das den Wärmeaustauscher durchströmende Medium mit Hilfe der Wärmepumpe entsprechend unterkühlt wird.

Der erfindungsgemäße Wärmeaustauscher umfaßt langgestreckte, von parallel zueinander angeordneten Spannlatten gehaltene, konvex geformte Metallblechen mit in ihrer Längsrichtung verlaufenden Sicken, die Rohre zur Führung einer die aufgenommene Wärmeenergie abführenden Flüssigkeit klemmend aufnehmen.

Wärmeaustauscher dieser Art lassen sich zur Belegung großer Flächen, beispielsweise von Hausdächern, verwenden, wobei dann im Gegensatz zu den bekannten Sonnenkollektoren die Himmelsrichtung und die Neigung des Daches keine wesentliche Rolle spielen.

Durch die konvexe Form der Metallbleche erfolgt eine gute Hinterlüftung, die gleichzeitig dazu dienen kann, aus dem Dachinneren austretende Verlustwärme wiederzugewinnen. Durch Wahl einer entsprechend niedrigen Temperatur des die Rohre durchströmenden Mediums wird also erreicht, daß dem Wärmeaustauscher sowohl von außen als auch gegebenenfalls von innen her Wärmeenergie zufließt, die von den Metallblechen in Querrichtung zu den Rohren hingeleitet und von diesen an das durchfließende Medium abgegeben wird.

Selbstverständlich lassen sich die erfindungsgemäßen Wärmeaustauscher nicht nur auf Hausdächer auflegen, sondern auch auf andere horizontale, schräge oder sogar vertikale Flächen, beispielsweise auf Hauswände, Mauern und dergleichen. Wärmeaustauscher gemäß der Erfindung lassen sich deshalb in wesentlich größerem Umfange und damit auf wesentlich größeren Gesamtflächen unterbringen, als die bekannten Sonnenkollektoren, deren Wirksamkeit von ihrer Ausrichtung zur Sonne abhängig ist.

3

Wärmeaustauscher nach der Erfindung gestatten deshalb sowohl bei alleinstehenden Häusern als auch bei zusammenstehenden Häusergruppen die Wiedergewinnung eines großen Teiles der ungewollt abgestrahlten und abgeleiteten Wärme.

Vorzugsweise wird vorgeschlagen, daß die Außenseiten der Metallbleche der Wärmeaustauscher geschwärzt sind. Dadurch wird der Umwelt nicht nur durch Wärmeleitung und durch Konvektion Wärme entzogen, sondern zusätzlich in besonders wirkungsvoller Weise auch durch Strahlung.

Vorzugsweise werden die Spannlatten des Wärmeaustauschers durch Profilstäbe in festgelegten Abständen voneinander gehalten und weisen insbesondere einen schwalbenschwanzförmigen Querschnitt auf, der eine Befestigung der Metallbleche erleichtert.

Dabei ist vorgesehen, daß die Längsränder der Metallbleche aufwärts abgewinkelt sind und mit diesen abgewinkelten Randbereichen an den Seitenflächen der Spannlatten anliegen. Insbesondere greifen die abgewinkelten Ränder der Metallbleche um die oberen Längskanten der Spannlatten herum. Infolge der in den gebogenen Metallblechen durch die Spannlatten erzeugten Vorspannung erfolgt so eine sichere Festlegung eines jeden Metallblechs zwischen zwei benachbarten Spannlatten.

Um den Halt der Metallbleche noch sicherer zu gestalten, sind Abdeckleisten von etwa U-förmigem Querschnitt vorgesehen, die die abgewinkelten Ränder der Metallbleche übergreifen und die Metallbleche damit klemmend an den Spannlatten festhalten. Im Falle der Verwendung von Spannlatten mit schwalbenschwanzförmigem Querschnitt sind die Schenkel dieser Abdeckleisten etwas einwärts gewinkelt.

Unter den Metallblechen ist vorzugsweise eine wasserdichte Folie angeordnet, die in einfacher und billiger Weise eine wasserdichte Abdeckung bildet, ohne als Wasserdampfsperre zu wirken.

Durch die besondere Art der Befestigung wird ein Aufnageln oder Aufschrauben der Wärmeaustauscher mit den sich daraus ergebenden Nachteilen vermieden. Eine in dieser Richtung verbesserte Ausführung des erfindungsgemäßen Wärmeaustauschers zur Auflage auf horizontale oder schräge Flächen, also insbesondere auf Dächer, ist dadurch gekennzeichnet, daß die Profilstäbe aus einem Werkstoff möglichst hoher Dichte bestehen. Diese Profilstäbe werden dann nicht auf die Unterlage, also auf Dachsparren oder dergleichen, aufgenagelt oder aufgeschraubt, sondern einfach aufgelegt und halten sich infolge ihres hohen Gewichtes fest. Vorzugsweise bestehen die Profilstäbe aus Beton.

Die Profilstäbe sind zweckmäßig mit den Spannlatten durch Befestigungselemente, vorzugsweise Schrauben, verbunden. Dadurch entsteht ein Gitter von Profilstäben und Spannlatten und dazwischen angeordneten Metallblechen, das sich insgesamt durch sein Eigengewicht auf dem Dach oder dergleichen festhält.

Eine erhebliche Verbesserung dieser Einrichtung erfolgt dadurch, daß den Profilstäben unterseitig Zwischenplatten aus einem Werkstoff geringer Wärmeleitfähigkeit, beispielsweise aus einem Hartschaumstoff, zugeordnet sind. Dabei ist vorgesehen, daß die Zwischenplatten gegenüber den Profilstäben verzahnt sind, so daß sie in Querrichtung nicht gegen diese verschoben werden können.

Vorzugsweise bilden diese Zwischenplatten zumindest oberseitig eine praktisch geschlossene Decke, indem sie sich überlappen.

Die Verzahnung erfolgt durch in Querrichtung der Zwischenplatten auf deren Oberseite verlaufende, kanalförmige Ausnehmungen und formschlüssig in diese eingreifende Rippen auf der Unterseite der Profilstäbe. Dadurch ist ein Abrutschen der miteinander verbundenen Wärmetauscher mit den Profilstäben gegenüber den Zwischenplatten auch auf einem schrägen Dach nicht möglich.

Die Zwischenplatten sind parallel zu den Ausnehmungen auf der Unterseite mit Aussparungen zur Aufnahme der Dachlatten des mit der Einrichtung zu bedeckenden Dachstuhles versehen. An der Oberseite der Zwischenplatten sind Wasserablaufrillen vorgesehen, die rechtwinklig zu den kanalförmigen Ausnehmungen verlaufen und die eine größere Tiefe als diese haben. Damit verlaufen bei aneinandergefügten Zwischenplatten die Wasserablaufrillen von dem First des Daches zur Traufe hin.

Um die Zwischenplatten zum Dachstuhl hin wasserundurchlässig zu gestalten, ist eine die gesamte untere Oberfläche jeder Zwischenplatte bedeckende Folie vorgesehen. Damit können beim Auflegen der Einrichtung auf einen Dachstuhl zuerst die Zwischenplatten, einander überlappend, wie Dachziegel auf den Dachstuhl aufgebracht werden. Dabei fluchten die Wasserablaufrillen miteinander und die Ausnehmungen zur Aufnahme der Rippen der Profilstäbe fluchten ebenfalls miteinander, stehen jedoch rechtwinklig zu den Wasserablaufrillen, verlaufen also parallel zum Dachfirst.

Die vorzugsweise aus Beton hergestellten Profilstäbe können der Einfachheit halber aus Teilstücken zusammengefügt sein, die durch Sicherungselemente miteinander verbunden sind. Auf diese Weise können die Teilstücke der Profilstäbe in deren Längsrichtung nicht auseinandergezogen werden, so daß die von diesen getragenen Spannlatten im vorbestimmten Abstand zueinander verlaufen.

Um das Einbringen von Befestigungselementen, insbesondere Schrauben,in die Profilstäbe zu vereinfachen, sind von deren Oberseite ausgehend Dübel in diese eingelassen.

Es ist jedoch auch möglich, den Abstand der Spannlatten auf den Profilstäben dadurch zu sichern, daß die Profilstäbe die Spannlatten zum Teil aufnehmende Quernuten aufweisen.

In der Zeichnung sind Ausführungsbeispiele einer auf Dächer auflegbaren Einrichtung zur Aufnahme und Nutzbarmachung von Umweltwärme dargestellt. In der Zeichnung zeigen:

Fig. 1 einen Schnitt durch einen erfindungsgemäßen Wärmeaustauscher;

Fig. 2 eine vergrößerte Teildarstellung aus Fig. 1;

Fig. 3 eine Teilansicht vom Giebel eines Hauses auf den mit Wärmeaustauschern belegten Dachstuhl und

Fig. 4 eine schaubildliche Darstellung eines Teiles eines Dachstuhls mit Wärmeaustauscher und wärmedämmenden Zwischenplatten.

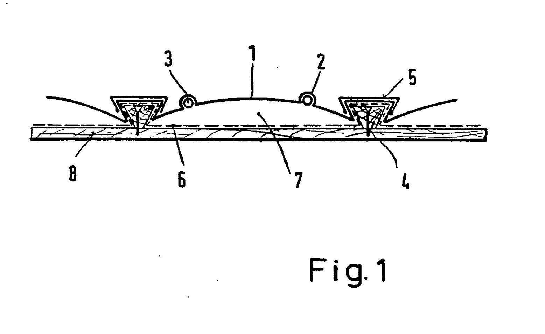

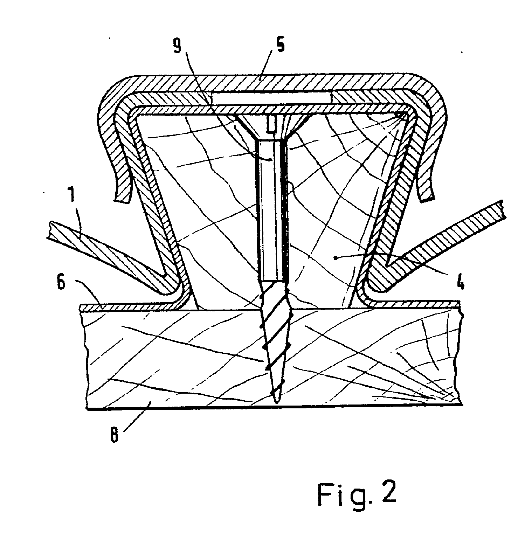

Der in Fig. 1 und 2 dargestellte Wärmeaustauscher umfaßt ein konves gebogenes Metallblech 1 mit in Längsrichtung verlaufenden Sicken 2, in die Metallrohre 3 klemmend eingelegt sind.

An den Seitenkanten ist das Metallblech 1 in der insbesondere aus Fig. 2 ersichtlichen Weise abgekröpft und liegt dort an einer Spannlatte 4 an, die einen schwalbenschwanzförmigen Querschnitt besitzt. Dadurch, daß die Seitenwände dieser Spannlatte schräg in Richtung auf die benachbarte Spannlatte hin geneigt sind, wird ein unbeabsichtigtes Herausgleiten des Metallblechs 1 verhindert.

Die Spannlatten 4 sind mittels Schrauben 9 an Profilstäben 8 befestigt. Sofern dieser Wärmeaustauscher auf dem Dach eines Hauses angebracht werden soll, kann man die Latten des Dachstuhls als Profilstäbe 8 verwenden.

Vor dem Auflegen der Blechplatten 1 auf die Spannlatten 4 werden diese und die gesamte Auflagefläche mit einer durchgehenden Folie 6 belegt, die die Spannlatten umgibt. Die Folie besteht im beschriebenen Ausführungsbeispiel aus Polyäthylen.

Nach dem Auflegen der Metallbleche 1 werden Metallschienen 5 von etwa U-förmigem Querschnitt über die Spannlatten und die diese umgreifenden, abgewinkelten Seitenkanten der Metallbleche geschoben bzw. aufgeschnappt. Diese Metallschienen bewirken eine sichere Befestigung der Metallplatten an den Spannlatten 4.

Wie man sieht, befindet sich unterhalb der gewölbten Metallbleche 1, zwischen diesen und der Kunststofffolie 6, jeweils ein Zwischenraum 7, der eine gute Durchlüftung gewährleistet.

8

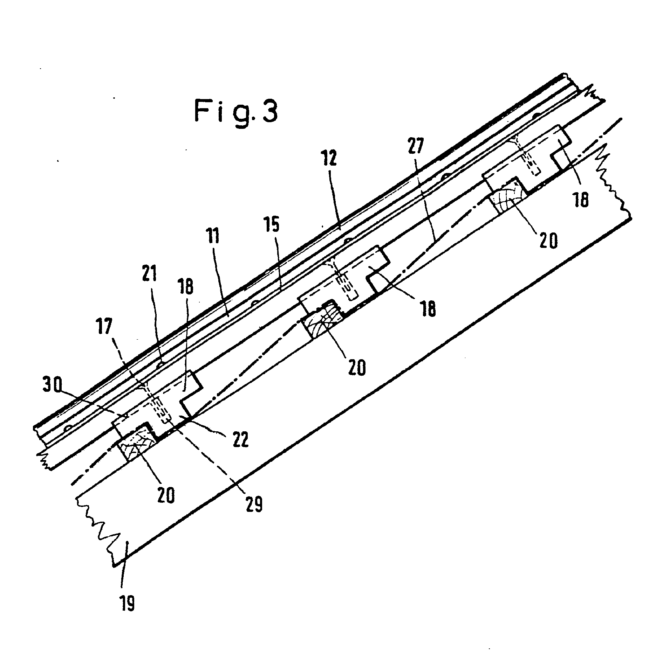

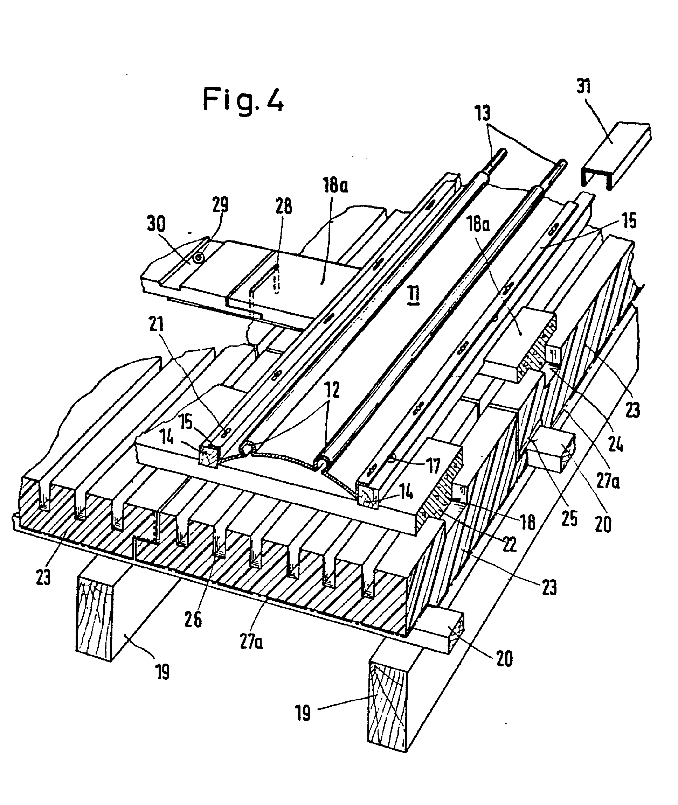

Eine vorteilhafte Weiterbildung dieses Wärmetauschers, zur Auflage auf ein Schrägdach bestimmt, ist in den Figuren 3 und 4 dargestellt.

Der Dachstuhl eines Hauses umfaßt unter anderem von dem First zur Traufe hin verlaufende Sparren 19, auf deren Oberseiten in vorbestimmten Abständen voneinander verlaufende Dachlatten 20 genagelt sind. Auf diesen Dachstuhl ist eine Kunststoffolie 27 in einer oder mehreren Bahnen aufgebracht. Die Einrichtung ist dann auf die Folie aufgebracht, so daß diese durch das Gewicht der Einrichtung auf dem Dachstuhl gehalten ist.

Die Einrichtung selbst umfaßt Profilstäbe aus einem Werkstoff hoher Wichte. Bei dem in der Zeichnung dargestellten Ausführungsbeispiel sind die Profilstäbe 18 aus Beton gefertigt. Auf der Unterseite weist jeder Profilstab 18 eine Rippe 22 auf, die so bemessen ist, daß sie eine etwas geringere Höhe als die Dachlatten 20 hat. Damit liegt jeder Profilstab mit seinem gesamten Gewicht auf und an einer Dachlatte 20. Die in Abständen voneinander liegenden Profilstäbe 18 weisen Quernuten 30 auf, die so ausgebildet sind, daß sie vom First zur Traufe hin miteinander fluchten. Von den Böden der Quernuten erstrecken sich Dübel 29, die zur Aufnahme von Schrauben 17 in die Profilstäbe eingebracht sind.

In die miteinander fluchtenden Quernuten sind Spannlatten 14 eingebracht und durch Schrauben 17 mit den Profilstäben 18 verbunden. Zwischen den Spannlatten sind konvex vorgespannte, sich gegen die Spannlatten abstützende, außen geschwärzte Metallbleche 11 eingebracht, die in ihrer Längsrichtung verlaufende Sicken 12 umfassen. Diese Sicken dienen zur klemmenden Aufnahme von Metallrohren 13, die wiederum zur Führung einer die aufgenommene Wärmeenergie abführenden Flüssigkeit dienen. Zusätzlich sind die Metallbleche an ihren beiden Rändern mit Befestigungsstegen 15 versehen, die Langlöcher aufweisen, durch die Befestigungselemente 21 in die Spannlatten zum Sichern der Metallbleche eingebracht sind. Die Metallbleche und deren konvexe Form sowie die Anordnung der seitlichen Befestigungsstege sind Fig. 4 zu entnehmen.

Das in Fig. 4 dargestellte Ausführungsbeispiel unterscheidet sich von dem vorbeschriebenen nur dadurch, daß zwischen die Einrichtung und den Dachstuhl Zwischenplatten 23 geschaltet sind. Die Zwischenplatten sind aus einem Werkstoff geringer Wärmeleitfähigkeit hergestellt. An ihren Rändern sind sie so gestaltet, daß sie einander überlappend auf den Dachstuhl aufgelegt werden können, wobei die Dachlatten 20 in Aussparungen 25 verlaufen, die jeweils zwischen zwei benachbarten Zwischenplatten 23 gebildet sind. In der Zeichnung ist zwischen zwei sich berührenden Zwischenplatten zu Verdeutlichungszwecken jeweils ein Spalt dargestellt. In der Praxis ist dieser jedoch nicht vorhanden. Die Platten sind so bemessen, daß sie dicht aneinander liegen.

Während sich die Aussparungen 25 auf der Unterseite der Platten befinden, weisen die Oberseiten der Zwischenplatten 23 in Querrichtung verlaufende kanalförmige Ausnehmungen 24 auf, die der Aufnahme der Rippen 22 der Profilstäbe 18 dienen. Rechtwinklig zu diesen kanalförmigen Ausnehmungen 24 sind von der Oberseite her in die Zwischenplatten 23 Rillen 26 eingebracht, die dem Wasserablauf dienen. Um die Wasserablaufrillen nicht durch die kanalförmige Ausnehmung 24 zu unterbrechen, sind die Wasserablaufrillen 26 tiefer bemessen als die kanalförmige Ausnehmung 24. Somit ist eine ununterbrochene Wasserführung vom First zur Traufe des Daches hin möglich.

Die Profilstäbe 8 sind bei dem in Fig. 4 dargestellten Ausführungsbeispiel durch Teilstücke 18a gebildet. Um ein Auseinanderziehen der Teilstücke in Längsrichtung zu verhindern, sind die Profilstäbe so gestaltet, daß sich die Teilstücke überlappen. Die überlappenden Bereiche sind durch ein Sicherungselement 28, beispielsweise eine Klammer oder Schloßkralle miteinander verbunden.

Während beim vorgenannten Ausführungsbeispiel ohne Verwendung der Zwischenplatten eine Kunststoffolie in einer oder mehreren Bahnen direkt auf den Dachstuhl vor dem Aufbringen der Einrichtung aufgelegt wurde, weist bei dem in Fig. 4 dargestellten Ausführungsbeispiel jede Zwischenplatte eine ihre gesamte untere Oberfläche bedeckende Folie 27a auf. Bei dem in der Zeichnung dargestellten Ausführungsbeispiel erstrecken sich die Folien 27a auch über die einander übergreifenden Seiten der Zwischenplatten 23. Auf diese Weise wird eine wasserdichte Verbindung der einzelnen Zwischenplatten 22 geschaffen, so daß eine praktisch geschlossene Decke entsteht.

Über die Befestigungsstege 15 zweier benachbarter Metallbleche 11 und über die zugeordnete Spannlatte 14 ist jeweils eine U-förmig ausgebildete Abdeckleiste 31 aufgebracht, die durch Auffedern der seitlichen Schenkel fest aufgeschnappt ist. Damit ist eine auf Dachstühle auflegbare Einrichtung geschaffen, die ohne Verwendung von Befestigungselementen sicher auf dem Dach angeordnet ist.

1

Patentansprüche:

1. Wärmeaustauscher zur Gewinnung von Umweltwärme, gekennzeichnet durch langgestreckte, von parallel zueinander angeordneten Spannlatten (4, 14) gehaltene, konvex verformte Metallbleche (1, 11) mit in ihrer Längsrichtung verlaufenden Sicken (2, 12), die Rohre (3, 13) zur Führung einer die aufgenommene Wärmeenergie abführenden Flüssigkeit klemmend aufnehmen.

2. Wärmeaustauscher nach Anspruch 1, dadurch gekennzeichnet, daß die Außenseiten der Metallbleche geschwärzt sind.

3. Wärmeaustauscher nach Anspruch 1 und 2, dadurch gekennzeichnet, daß die Spannlatten (4, 14) durch Profilstäbe (8, 18) in festgelegten Abständen voneinander gehalten werden.

4. Wärmeaustauscher nach Anspruch 1 bis 3, dadurch gekennzeichnet, daß die Spannlatten (4) einen schwalbenschwanzförmigen Querschnitt aufweisen.

5. Wärmeaustauscher nach Anspruch 1 bis 4, dadurch gekennzeichnet, daß die Längsränder der Metallbleche (1,11) aufwärts abgewinkelt sind und mit diesen abgewinkelten Randbereichen an den Seitenflächen der Spannlatten (4, 14) anliegen .

6. Wärmeaustauscher nach Anspruch 5,
dadurch gekennzeichnet,
daß die abgewinkelten Ränder der Metallbleche (1,11)
um die oberen Längskanten der Spannlatten (4, 14)
herumgreifen.

7. Wärmeaustauscher nach Anspruch 5 und 6,
gekennzeichnet durch
Abdeckleisten (5, 31) von etwa U-förmigem Querschnitt, die die abgewinkelten Ränder der Metallbleche (1, 11) übergreifen und die Metallbleche
damit klemmend an den Spannlatten (4, 14) festhalten.

8. Wärmeaustauscher nach Anspruch 1 bis 7,
gekennzeichnet durch
eine unter den Metallblechen (1, 11) angeordnete
wasserdichte Folie (6, 27).

9. Wärmeaustauscher nach Anspruch 3 bis 8,
dadurch gekennzeichnet,
daß die Profilstäbe (18) aus einem Werkstoff
möglichst hoher Wichte bestehen.

10. Wärmeaustauscher nach Anspruch 9,
dadurch gekennzeichnet,
daß die Profilstäbe (18) aus Beton bestehen.

11. Wärmeaustauscher nach Anspruch 3 bis 10,
dadurch gekennzeichnet,
daß die Profilstäbe (18) durch Befestigungselemente
(17), vorzugsweise Schrauben, mit den Spannlatten
(14) verbunden sind.

12. Wärmeaustauscher nach Anspruch 3 bis 11,
gekennzeichnet durch
den Profilstäben (18) unterseitig zugeordnete und
mit ihnen gegen Verschiebung in Querrichtung verzahnte Zwischenplatten (23) aus einem Werkstoff geringer Wärmeleitfähigkeit.

13. Wärmeaustauscher nach Anspruch 12,
dadurch gekennzeichnet,
daß die Zwischenplatten (23), einander überlappend, eine zumindest oberseitig praktisch geschlossene Decke bilden.

14. Wärmeaustauscher nach Anspruch 12 und 13,
dadurch gekennzeichnet,
daß die Verzahnung durch in Querrichtung der
Zwischenplatten (23) auf deren Oberseite verlaufende, kanalförmige Ausnehmungen (24) und
formschlüssig in diese eingreifenden Rippen (22)
auf der Unterseite der Profilstäbe (18) gebildet
ist.

15. Wärmeaustauscher nach Anspruch 12 bis 14,
gekennzeichnet durch
parallel zu den Ausnehmungen (24) auf der Unterseite der Zwischenplatten (23) angeordnete Aussparungen (25) zur Aufnahme der Dachlatten (20)
eines mit dem Wärmeaustauscher zu bedeckenden
Dachstuhles (19, 20).

16. Wärmeaustauscher nach Anspruch 12 bis 15,
gekennzeichnet durch
an der Oberseite der Zwischenplatten (23) vorgesehene Wasserablaufrillen (26), die rechtwinklig
zu der kanalförmigen Ausnehmung (24) verlaufen und
eine größere Tiefe als diese haben.

17. Wärmeaustauscher nach Anspruch 16,
gekennzeichnet durch
eine die gesamte untere Oberfläche der Zwischenplatten (23) und teilweise deren Seiten bedeckende

0014355

Folie (27).

18. Wärmeaustauscher nach Anspruch 3 bis 17,
dadurch gekennzeichnet,
daß die Profilstäbe (18) aus durch Sicherungselemete
(28) miteinander verbindbaren Teilstücken (18a) zusammengefügt sind.

19. Wärmeaustauscher nach Anspruch 18,
gekennzeichnet durch
von der Oberseite der Profilstäbe (18) aus in
diese eingelassene Düse (29) zur Aufnahme von
Schrauben (17).

20. Wärmeaustauscher nach Anspruch 18 und 19,
dadurch gekennzeichnet,
daß die Profilstäbe (18, 18a) zur seitlichen
Sicherung der Spannlatten (14) diese zum Teil aufnehmende Quernuten (30) aufweisen.

Fig.1

Fig. 2

# Fig. 3

Fig. 4

0014355

Nummer der Anmeldung

EP 80 10 0238

**Europäisches Patentamt**

# EUROPÄISCHER RECHERCHENBERICHT

| KLASSIFIKATION DER ANMELDUNG (Int.Cl. 3) |
|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 702 938 (PANTHERM) <br> * Das ganze Dokument * <br><br> -- | 1,3 |
| | NL - A - 78 02964 (METALLWERKE) (23.1.1979) <br> * Ganzes Dokument * <br> & FR - A - 2 398 157 (16.2.1979) <br><br> -- | 1,2,5, 7,8 |
| | DE - A - 2 702 939 (PANTHERM) <br> * Ganzes Dokument * <br><br> -- | 1,3 |
| | FR - A - 892 332 (BARRE) <br> * Ganzes Dokument * <br><br> -- | 1 |
| P | FR - A - 2 404 180 (PROPULSION) <br> * Ganzes Dokument * <br><br> -- | 1,5,6 |
| P | EP - A - 0 000 543 (PANTHERM) <br> * Seite 16, Zeilen 28-30; Seiten 17,18; Figur 15 * <br><br> -- | 1 |
| A | FR - A - 2 330 974 (AUNAC) <br> * Ganzes Dokument * <br><br> -- | 1 |
| A | DE - A - 2 712 532 (PANTHERM) <br><br> ./. | 1 |

F 24 J 3/02

**RECHERCHIERTE SACHGEBIETE (Int. Cl. ³)**

F 24 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-05-1980 | SMETS |

EPA form 1503.1 06.78

**EUROPÄISCHER RECHERCHENBERICHT**

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | * Ganzes Dokument * | | |
| | -- | | |
| A | DE - A - 2 523 976 (HESS) | 1 | |
| | * Ganzes Dokument * | | |
| | ---- | | |

**RECHERCHIERTE SACHGEBIETE (Int. Cl. 3)**